# EUROPÄISCHE PATENTANMELDUNG

(11) **EP 0 848 532 A2**
(43) Veröffentlichungstag der Anmeldung: **17.06.1998**
(21) Anmeldenummer: 97118896.6
(22) Anmeldetag: 30.10.1997
(51) Int. Cl.: H04M 1/57

(54) **Fernsprechendgerät**

(30) Priorität: 11.12.1996 DE 19651382
(71) Anmelder: ROBERT BOSCH GMBH, 70442 Stuttgart (DE)
(72) Erfinder: Lange, Heinz, 65933 Frankfurt (DE)

(57) **Zusammenfassung**

Es wird ein Fernsprechendgerät (2) vorgeschlagen, das zur Identifikation der Rufnummer eines rufenden Teilnehmers dient. Das Fernsprechendgerät (2) umfaßt eine Rufidentifikationsschaltung (1) und eine Eingangsstufe (10) zur Aufbereitung von bei ankommenden Rufen übertragenen Rufinformationen. Der Eingangsstufe (10) sind sinusförmige Rufinformationssignale zuführbar. In der Eingangsstufe (10) erfolgt eine Umwandlung der sinusförmigen Rufinformationssignale in rechteckförmige Rufinformationssignale. Die rechteckförmigen Rufinformationssignale sind der Rufindentifikationsschaltung (1) zuführbar.

## Beschreibung

### Stand der Technik

Die Erfindung geht von einem Fernsprechendgerät nach der Gattung des Hauptanspruchs aus.

Aus der noch nicht vorveröffentlichten deutschen Patentanmeldung mit dem Aktenzeichen 196 19 610.8 ist bereits ein Fernsprechendgerät bekannt, das eine Steuerung aufweist, die mit einer Anzeigevorrichtung und einer Eingangsstufe zur Aufbereitung von bei ankommenden Rufen übertragenen Rufinformationen verbunden ist, wobei die Anzeigevorrichtung insbesondere zur alphanumerischen Anzeige der Rufinformationen dient und wobei die Auswertung der Informationen des Rufinformationssignals in der Steuerung erfolgt.

### Vorteile der Erfindung

Das erfindungsgemäße Fernsprechendgerät mit den Merkmalen des Hauptanspruchs hat demgegenüber den Vorteil, daß auf einfache Weise eine Anpassung der dem Fernsprechendgerät vom Telekommunikationsnetz zugeführten Rufinformationssignale in die für die Ermittlung des rufenden Teilnehmers in der Rufidentifikationsschaltung erforderliche Rechteckform bewirkt wird.

Durch die in den Unteransprüchen aufgeführten Maßnahmen sind vorteilhafte Weiterbildungen und Verbesserungen des im Hauptanspruch angegebenen Fernsprechendgerätes möglich.

Besonders vorteilhaft ist, daß die Komparatorschaltung zwei vorzugsweise als Operationsverstärker ausgebildete Komparatoren umfaßt, wobei die Referenzspannung des ersten Komparators oberhalb und die Referenzspannung des zweiten Komparators unterhalb der Mittenspannung des abgeleiteten Signals liegt und daß der Komparatorschaltung ein vorzugsweise als Flip-Flop ausgebildeter Schmitt-Trigger nachgeschaltet ist. Auf diese Weise ist sichergestellt, daß das Ausgangssignal der Eingangsstufe ein Rechtecksignal mit präzisen Flanken ist und daß dieses Rechtecksignal die gleiche Frequenz wie die sinusförmigen Eingangssignale der Eingangsstufe aufweist. Somit kann die Rufidentifikationsschaltung die Rufinformationssignale einwandfrei erkennen und den rufenden Teilnehmer fehlerfrei ermitteln. Dabei läßt sich die Eingangsstufe auf einfache und wenig aufwendige Weise aus Standardbauteilen aufbauen, wodurch sie besonders preisgünstig realisierbar ist.

Vorteilhaft ist außerdem, daß der Komparatorschaltung mindestens eine einen Bandpaß bildende Filterstufe vorgeschaltet ist. Auf diese Weise werden den sinusförmigen Rufinformationssignalen überlagerte Störungen vor der Umwandlung in die rechteckförmigen Rufinformationssignale ausgefiltert, so daß die rechteckförmigen Rufinformationssignale nicht mit Störungen behaftet sind. Dadurch wird die Präzision bei der Ermittlung des rufenden Teilnehmers in der Rufidentifikationsschaltung weiter verbessert.

Vorteilhaft ist auch, daß der Operationsverstärker in dem Rückkopplungszweig eine Diodenantiparallelschaltung aufweist. Dadurch werden bereits bei der Filterung die sinusförmigen Rufinformationssignale annähernd in Rechteckform gebracht, wodurch die Umwandlung in die rechteckförmigen Rufinformationssignale unterstützt und somit verbessert wird. Außerdem erfolgt auf diese Weise eine Spannungsbegrenzung mit einfachen Mitteln.

Vorteilhaft ist weiterhin, daß der invertierende Eingang des Operationsverstärkers mit dem nicht invertierenden Eingang über eine Diodenantiparallelschaltung verbunden ist. Auf diese Weise wird der Eingang der Filterstufe vor Spannungsspitzen geschützt und ebenfalls die Umwandlung der Rufinformationssignale in Rechteckform unterstützt und dadurch verbessert.

Vorteilhaft ist weiterhin, daß der Arbeitspunkt des Operationsverstärkers durch einen Spannungsteiler auf die halbe Versorgungsspannung der Eingangsstufe gelegt ist und daß dem Widerstand des Spannungsteilers, an dem die halbe Versorgungsspannung abgegriffen wird, ein Kondensator parallelgeschaltet ist. Auf diese Weise werden der Versorgungsspannung überlagerte Störungen ausgefiltert, so daß die Bildung der rechteckförmigen Rufinformationssignale von diesen Störungen unbeeinflußt bleibt.

### Zeichnung

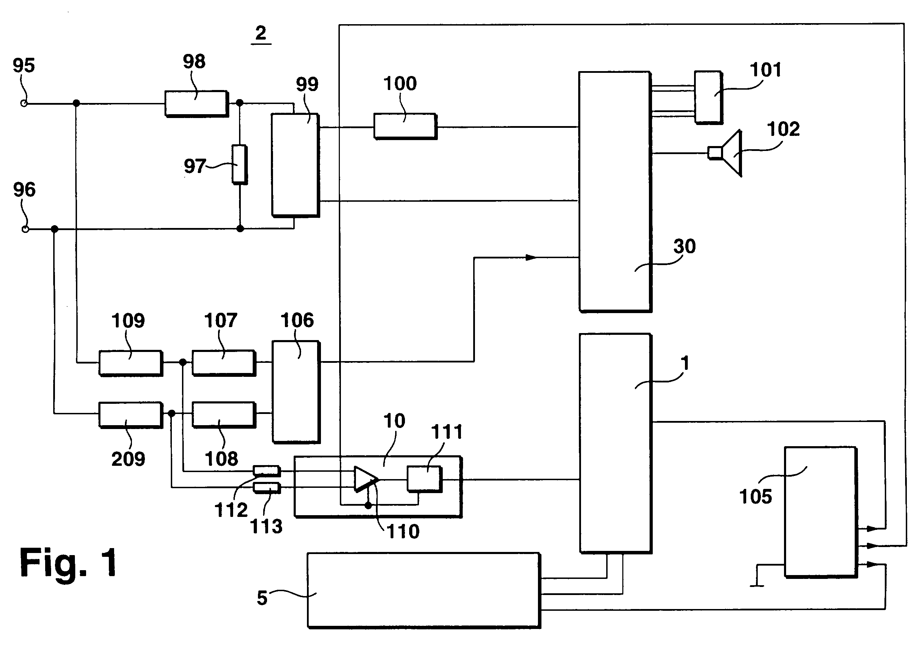

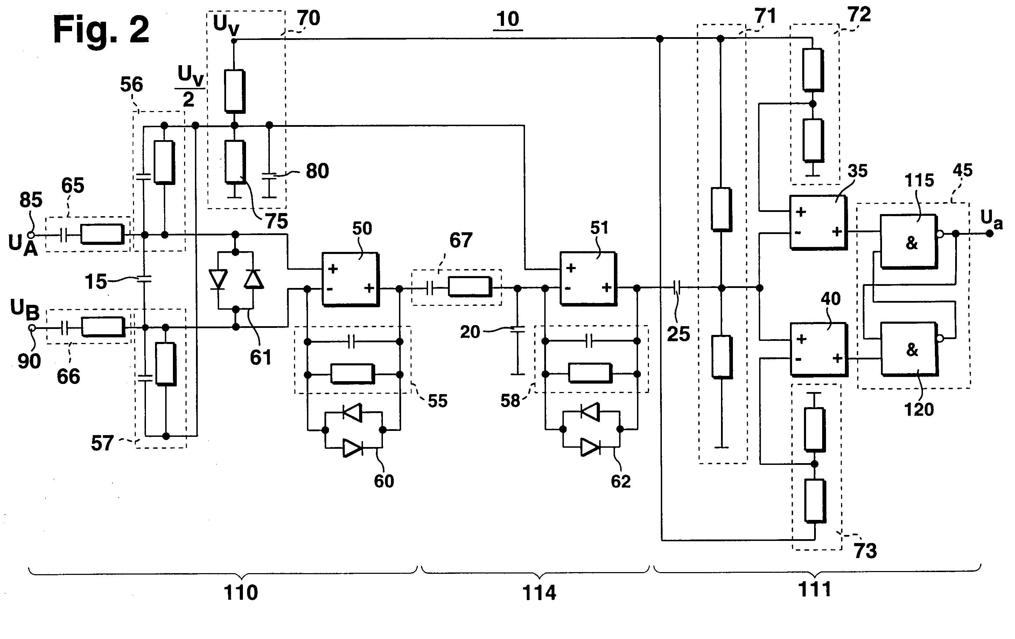

Ein Ausführungsbeispiel der Erfindung ist in der Zeichnung dargestellt und in der nachfolgenden Beschreibung näher erläutert. Es zeigen Figur 1 ein Blockschaltbild des Fernsprechendgerätes und Figur 2 einen Schaltplan für die Umwandlung sinusförmiger Rufinformationssignale in rechteckförmige Rufinformationssignale in der Eingangsstufe.

### Beschreibung des Ausführungsbeispiels

In Figur 1 kennzeichnet 95 eine erste Leitungsader a und 96 eine zweite Leitungsader b einer Amtsleitung des Netzbetreibers. Die erste Leitungsader 95 ist über eine 16-kHz-Bandsperre 98 und einen Varistor 97 mit der zweiten Leitungsader 96 verbunden. Dem Varistor 97 ist ein erster Gleichrichter 99 parallelgeschaltet. Der erste Gleichrichter 99 ist über einen Nummernschalterimpulskontakt-Transistor 100 zweiadrig mit einem Sprechkreis 30 verbindbar. An den Sprechkreis 30 sind ein Handapparat 101 und ein Lautsprecher 102 angeschlossen. Die erste Leitungsader 95 ist außerdem über eine erste W-Ader-Abschaltung 109, eine erste Tonrufimpedanz 107, einen zweiten Gleichrichter 106, eine zweite Tonrufimpedanz 108 und eine zweite W-Ader-Abschaltung 209 mit der zweiten Leitungsader 96 verbunden. Der zweite Gleichrichter 106 ist an den Sprechkreis 30 angeschlossen. Eine Filterstufe 110 einer Eingangsstufe 10 zur Aufbereitung von Rufinformationen bei ankommenden Rufen ist über zwei symmetrische Signaleingänge einerseits über eine erste Eingangsimpedanz 112 zwischen der ersten W-Ader-Abschaltung 109 und der ersten Tonrufimpedanz 107 und andererseits über eine zweite Eingangsimpedanz 113 zwischen der zweiten W-Ader-Abschaltung 209 und der zweiten Tonrufimpedanz 108 angeschlossen. Die Filterstufe 110 ist ausgangsseitig mit einer Komparatorschaltung 111 verbunden, die an eine Rufidentifikationsschaltung 1 angeschlossen ist. An die Rufidentifikationsschaltung 1 ist außerdem eine Anzeigevorrichtung 5 angeschlossen. Zur Spannungsversorgung ist die Anzeigevorrichtung 5, die Rufidentifikationsschaltung 1 und mit der Filterstufe 110 und der Komparatorschaltung 111 die Eingangsstufe 10 mit jeweils einem Ausgang einer Spannungsversorgung 105 verbunden.

Die 16-kHz-Bandsperre 98 verhindert, daß Gebührenimpulse im Gesprächszustand bis in den Sprechkreis 30 gelangen. Der Varistor 97 stellt eine Schutzmaßnahme für den Sprechkreis 30 vor Überspannungen insbesondere als Folge eines Blitzschlages dar. Der Nummernschalterimpulskontakt-Transistor 100 dient zur Unterbrechung der Schleife, beispielsweise bei Impulswahl und als elektronischer Gabelumschalter. Mit Hilfe des Lautsprechers 102 ist Lauthören und die akustische Wiedergabe eines Tonrufs möglich. Der erste Gleichrichter 99 dient als Verpolungsschutz, so daß der Sprechkreis 30 unabhängig vom Vorzeichen der Gleichspannung des Leitungsadernpaares 95, 96 verpolungssicher an dieses anschließbar ist. Über die erste und die zweite W-Ader-Abschaltung 109, 209 wird der Tonrufzweig des Fernsprechendgerätes direkt an das Leitungsadernpaar 95, 96 angeschlossen und über eine geforderte Eingangsimpedanz, die durch die beiden Tonrufimpedanzen 107 und 108 gebildet wird und den zweiten Gleichrichter 106 gelangen die Rufsignale in den Sprechkreis 30. Der Tonruf wird bei Belegung der Schleife durch die erste und die zweite W-Ader-Abschaltung 109, 209 von dem Leitungsadernpaar 95, 96 weggeschaltet. Durch die Wegschaltung des Tonrufzweiges vom Leitungsadernpaar 95, 96 bei Schleifenbelegung wird eine Beeinträchtigung des Gesprächszustandes durch Tonruf verhindert. Ebenfalls hinter der ersten und der zweiten W-Ader-Abschaltung 109, 209 ist der Eingang der Eingangsstufe 10 über die beiden Eingangsimpedanzen 112 und 113 angeschlossen. Dieser Schaltungsteil wird ebenfalls nur bei Tonruf in einem Ruhezustand des Fernsprechendgerätes bei nicht belegter Schleife benötigt. Bei Belegung der Schleife wird die Eingangsstufe 10 durch die erste und die zweite W-Ader-Abschaltung 109, 209 mit den beiden Tonrufimpedanzen 107 und 108 von dem Leitungsadernpaar 95, 96 des Fernsprechendgerätes weggeschaltet. Bei Tonruf wird über das Leitungsadernpaar 95, 96 ein Rufinformationssignal zum Fernsprechendgerät übertragen und in der Eingangsstufe 10 gefiltert, verstärkt und für eine Auswertung in der Rufidentifikationsschaltung 1 vorbereitet. Die eigentliche Auswertung der Informationen des Rufinformationssignals erfolgt in der Rufidentifikationsschaltung 1 und die Anzeige mittels der Anzeigevorrichtung 5. Die Anzeigevorrichtung 5 kann beispielsweise als Sieben-Segment-Display oder als alphanumerische Anzeige ausgeführt sein. Eine mit dem Rufinformationssignal übertragene Rufnummer eines anrufenden Teilnehmers wird beispielsweise in einer nicht dargestellten Anrufliste gespeichert. Sie kann vom Benutzer abgerufen und direkt durch die Betätigung einer Wahlwiederholtaste einer ebenfalls nicht dargestellten Tastatur ausgewählt werden. Neben der Rufnummer des anrufenden Teilnehmers kann das Rufinformationssignal auch weitere den Anrufer identifizierende Daten enthalten, die ebenfalls in der Anrufliste abspeicherbar sind. Das Fernsprechendgerät kann auch über weitere Leistungsmerkmale verfügen, wie beispielsweise Freisprechen, Wahl bei aufgelegtem Hörer, Gebührenerfassung, usw. Die dazu erforderlichen Bauteile sind dann dem beschriebenen Ausführungsbeispiel hinzuzufügen.

Die Übertragung der Rufinformation geschieht nun folgendermaßen: In der ersten langen Rufpause zwischen zwei Rufsignalen wird durch FSK-Übertragung (frequency shift keying) ein die Rufinformation und Daten für eine definierte und fehlersichere Übertragung beinhaltendes Protokoll übertragen. Während dieser Zeit befindet sich das Fernsprechendgerät im aufgelegten Zustand, das heißt, der Tonrufzweig und die Eingangsstufe 10 sind noch mit dem Leitungsadernpaar 95, 96 des Fernsprechendgerätes verbunden. Der Nummernschalterimpulskontakt-Transistor 100 ist nicht durchgeschaltet, so daß in diesem Zustand kein Schleifenstrom aus der Schleife gezogen werden kann. Für die Steuerung 1 und die Anzeigevorrichtung 5 kann daher während der Übertragung des Rufinformationssignals keinerlei Energie aus der Schleife entnommen werden. Die Eingangsimpedanz der Eingangsstufe 10 ist außerdem so hochohmig, daß es auch nicht möglich ist, aus dem übertragenen Signal Energie für die Eingangsstufe 10 zu entnehmen. Während der Übertragung des Rufinformationssignals steht daher auch für die Eingangsstufe 10 keinerlei Energie aus der Schleife zur Verfügung. Um die Steuerung 1, die Anzeigevorrichtung 5 und die Eingangsstufe 10 während der Übertragung der Rufinformation und die Steuerung 1 und die Anzeigevorrichtung 5 auch in der nachfolgenden Zeit zwischen Rufsignalen, die zu demselben Anruf gehören, mit Energie zu versorgen, ist die Spannungsversorgung 105 vorgesehen.

In Figur 2 ist ein Schaltplan für die Eingangsstufe 10 dargestellt. Dabei ist der mit der ersten Eingangsimpedanz 112 verbundene erste Eingangsanschluß der Eingangsstufe 10 durch das Bezugszeichen 85 und der mit der zweiten Eingangsimpedanz 113 verbundene zweite Eingangsanschluß der Eingangsstufe 10 mit dem Bezugszeichen 90 gekennzeichnet. Die beiden Eingänge der Eingangsstufe 10 sind symmetrisch. Über den ersten Eingangsanschluß 85 wird der Eingangsstufe 10 während der ersten langen Rufpause zwischen zwei Rufsignalen ein sinusförmiges Rufinformationssignal U_{A} und über den zweiten Eingangsanschluß 90 ein entsprechend gegenphasiges sinusförmiges Rufinformationssignal U_{B} zugeführt. Der erste Eingangsanschluß 85 ist über einen ersten Hochpaß 65, der aus einem mit einem Widerstand in Serie geschalteten Kondensator besteht, mit dem nicht invertierenden Eingang (+) eines ersten Operationsverstärkers 50 verbunden. Der zweite Eingangsanschluß 90 ist über einen zweiten Hochpaß 66, der ebenfalls aus einem mit einem Widerstand in Serie geschalteten Kondensator besteht, mit dem invertierenden Eingang (-) des ersten Operationsverstärkers 50 verbunden. Die beiden Widerstände und die beiden Kondensatoren sind jeweils gleich dimensioniert, wobei in diesem Beispiel für den Widerstand ein Wert von 10 KΩ und für die Kapazität des Kondensators 15 nF gewählt werden. Der nicht invertierende Eingang (+) und der invertierende Eingang (-) des ersten Operationsverstärkers 50 sind über einen Koppelkondensator 15 der Kapazität 1 nF miteinander verbunden. Der nicht invertierende Ausgang (+) des ersten Operationsverstärkers 50 ist über einen ersten Tiefpaß 55, der aus einer Parallelschaltung eines Kondensators der Kapazität 1 nF mit einem Widerstand von 56,2 kΩ besteht, mit dem invertierenden Eingang (-) des ersten Operationsverstärkers 50 verbunden. Dem ersten Tiefpaß 55 ist eine erste Diodenantiparallelschaltung 60 mit zwei entgegengesetzt gepolten und parallelgeschalteten Dioden parallelgeschaltet. Eine gleich aufgebaute zweite Diodenantiparallelschaltung 61 verbindet den nicht invertierenden Eingang (+) mit dem invertierenden Eingang (-) des ersten Operationsverstärkers 50. Die von der Spannungsversorgung 105 gelieferte Versorgungsspannung U_{V} wird über einen ersten Spannungsteiler 70 aus zwei Widerständen mit jeweils 10 kΩ auf die halbe Versorgungsspannung 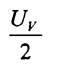 heruntergeteilt, wobei dem mit dem Bezugspotential verbundenen ersten Widerstand 75 des ersten Spannungsteilers 70, an dem die halbe Versorgungsspannung 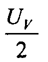 abgegriffen wird, ein erster Kondensator 80 parallelgeschaltet ist. Die halbe Versorgungsspannung 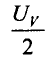 ist dem nicht invertierenden Eingang (+) des ersten Operationsverstärkers 50 über einen zweiten Tiefpaß 56, der aus einer Parallelschaltung eines Kondensators der Kapazität 4,7 nF und einem Widerstand von 10 kΩ besteht, zugeführt. Dasselbe Potential der halben Versorgungsspannung 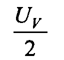 ist auch dem invertierenden Eingang (-) des ersten Operationsverstärkers 50 über einen dritten Tiefpaß 57, der gleich wie der zweite Tiefpaß 56 dimensioniert ist und aus einer Parallelschaltung eines Kondensators mit der Kapazität 4,7 nF und einem Widerstand von 10 kΩ besteht, zugeführt. Über einen dritten Hochpaß 67, der aus einem mit einem Widerstand von 10 kΩ in Serie geschalteten Kondensator der Kapazität 15 nF besteht, ist der nicht invertierende Ausgang (+) des ersten Operationsverstärkers 50 mit dem invertierenden Eingang (-) eines zweiten Operationsverstärkers 51 verbunden. Dem nicht invertierenden Eingang (+) des zweiten Operationsverstärkers 51 ist das auf die beschriebene Weise abgeleitete Potential der halben Versorgungsspannung 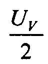 zugeführt. Über einen zweiten Kondensator 20 ist der invertierende Eingang (-) des zweiten Operationsverstärkers 51 mit dem Bezugspotential verbunden. Der nicht invertierende Ausgang (+) des zweiten Operationsverstärkers 51 ist über einen vierten Tiefpaß 58, der aus einer Parallelschaltung eines Kondensators der Kapazität 1 nF und einem Widerstand von 56,2 kΩ besteht, mit dem invertierenden Eingang (-) des zweiten Operationsverstärkers 51 verbunden. Dem vierten Tiefpaß 58 ist eine dritte Diodenantiparallelschaltung 62 parallelgeschaltet, die gleich aufgebaut ist wie die erste bzw. die zweite Diodenantiparallelschaltung 60 bzw. 61. Über einen dritten Kondensator 25 ist der nicht invertierende Ausgang (+) des zweiten Operationsverstärkers 51 mit dem invertierenden Eingang (-) eines dritten Operationsverstärkers 35, der einen ersten Komparator bildet, und mit dem nicht invertierenden Eingang (+) eines vierten Operationsverstärkers 40, der einen zweiten Komparator bildet, verbunden. Der invertierende Eingang (-) des dritten Operationsverstärkers 35 und der nicht invertierende Eingang (+) des vierten Operationsverstärkers 40 ist außerdem mit der Mittelanzapfung eines zweiten Spannungsteilers 71 verbunden, der aus zwei gleichen Widerständen von 10 kΩ gebildet ist. Dabei ist dem Zweiten Spannungsteiler 71 ebenfalls die Versorgungsspannung U_{V} zugeführt, so daß an der Mittelanzapfung als Arbeitspunkt für den dritten und den vierten Operationsverstärker 35 und 40 genauso wie für den ersten und den zweiten Operationsverstärker 50 und 51 die halbe Versorgungsspannung 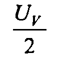 zugeführt ist. Die Versorgungsspannung U_{V} ist außerdem einem dritten Spannungsteiler 72 und einem vierten Spannungsteiler 73 zugeführt. Der dritte Spannungsteiler 72 und der vierte Spannungsteiler 73 bestehen ebenfalls jeweils aus zwei Widerständen. Der mit dem Versorgungsspannungspotential verbundene Widerstand des dritten Spannungsteilers 72 beträgt 10 kΩ und der mit dem Bezugspotential verbundene Widerstand des dritten Spannungsteilers 72 beträgt 10,5 kΩ, so daß das an der Mittelanzapfung des dritten Spannungsteilers 72 abgegriffene Potential dem 0,515-fachen der Versorgungsspannung U_{V} entspricht und dem nicht invertierenden Eingang (+) des dritten Operationsverstärkers 35 zugeführt ist. Der mit dem Versorgungsspannungspotential verbundene Widerstand des vierten Spannungsteilers 73 beträgt 10,5 kΩ, und der mit dem Bezugspotential verbundene Widerstand des vierten Spannungsteilers 73 beträgt 10 kΩ, so daß das Potential an der Mittelanzapfung des vierten Spannungsteilers 73 dem 0,487-fachen der Versorgungsspannung U_{V} entspricht und dem invertierenden Eingang (-) des vierten Operationsverstärkers 40 zugeführt ist. Der nicht invertierende Ausgang (+) des dritten Operationsverstärkers 35 und der nicht invertierende Ausgang (+) des vierten Operationsverstärkers 40 ist auf jeweils einen Eingang eines als Flip-Flop aus Zwei NAND-Gattern 115, 120 gebildeten Schmitt-Triggers 45 geführt. Dabei ist der nicht invertierende Ausgang (+) des dritten Operationsverstärkers 35 auf den ersten der beiden Eingänge des ersten NAND-Gatters 115 geführt und der nicht invertierende Ausgang (+) des vierten Operationsverstärkers 40 ist auf den zweiten der beiden Eingänge des zweiten NAND-Gatters 120 geführt. Der Ausgang des zweiten NAND-Gatters 120 ist auf den zweiten Eingang des ersten NAND-Gatters 115 geführt, und der Ausgang des ersten NAND-Gatters 115 ist auf den ersten Eingang des zweiten NAND-Gatters 120 geführt. Am Ausgang des ersten NAND-Gatters 115 wird außerdem ein rechteckförmiges Rufinformationssignal Uₐ abgegriffen und der Rufidentifikationsschaltung 1 zugeführt.

Die in Figur 2 dargestellte Eingangsstufe 10 ist somit in die erste Filterstufe 110, die von den beiden Eingangsanschlüssen 85 und 90 bis zum Ausgang des ersten Operationsverstärkers 50 reicht, eine zweite Filterstufe 114, die vom Ausgang des ersten Operationsverstärkers 50 bis zum Ausgang des zweiten Operationsverstärkers 51 reicht und die Komparatorschaltung 111, die vom Ausgang des zweiten Operationsverstärkers 51 bis zum Ausgang des ersten NAND-Gatters 115 reicht, aufgeteilt.

Die Eingangsstufe 10 muß die sinusförmigen Rufinformationssignale so aufbereiten, daß die Rufidentifikationsschaltung 1 die Rufinformationssignale einwandfrei erkennen und die mit den Rufinformationssignalen übertragene Rufnummer eines rufenden Teilnehmers ermitteln kann. Dazu muß am Ausgang der Eingangsstufe 10 ein Rechtecksignal anstehen, dessen Frequenz der Frequenz der sinusförmigen Rufinformationssignale am Eingang der Eingangsstufe 10 entspricht. Die Rufnummernsignalisierung erfolgt über sinusförmige Rufinformationssignale, wobei wie beschrieben ein FSK-Verfahren angewendet wird, so daß eine logische Eins durch die Frequenz 2,1 kHz und eine logische Null durch die Frequenz 1,3 kHz repräsentiert wird. Aufgrund der Übertragung über Leitungen sind den sinusförmigen Rufinformationssignalen Störungen aufgeprägt. Die Rufidentifikationsschaltung 1 benötigt zur Rufnummernidentifikation jedoch präzise, ungestörte Rechtecksignale mit wohl definierten Flanken. Zunächst müssen daher die Störungen der sinusförmigen Rufinformationssignale weggefiltert werden. Dazu werden die zwei Filterstufen mit dem ersten bzw. dem zweiten Operationsverstärker 50 und 51 verwendet, die jeweils einen Bandpaß mit einer Mittenfrequenz von 1,8 kHz bilden, wobei Frequenzen unterhalb von 1,3 kHz und oberhalb von 2,1 kHz entsprechend gedämpft sind. Die sinusförmigen Rufinformationssignale werden den beiden symmetrischen Eingängen der Eingangsstufe 10 gegenphasig eingekoppelt. Eine untere Bandbegrenzung erfolgt bereits durch den ersten und den zweiten Hochpaß 65 und 66. Dabei wird auch ein vorhandener Gleichanteil eliminiert. Eine obere Bandbegrenzung erfolgt durch den zweiten und den dritten Tiefpaß 56 und 57 über den den beiden Eingängen des ersten Operationsverstärkers 50 jeweils die halbe Versorgungsspannung 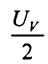 als DC-Arbeitspunkt für den ersten Operationsverstärker 50 zugeführt wird. Eine obere Bandbegrenzung erfolgt auch durch den ersten Tiefpaß 55 im Rückkopplungszweig des ersten Operationsverstärkers 50. Die Zuführung der halben Versorgungsspannung 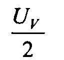 über den ersten Spannungsteiler 70 bewirkt aufgrund des ersten Kondensators 80 das Wegfiltern von der halben Versorgungsspannung 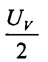 überlagerten Störungen oberhalb von 2 Hz. Die zweite Diodenantiparallelschaltung 61 dient dem Schutz des ersten Operationsverstärkers 50 bzw. der Eingangsstufe 10 vor durch Blitzschlag oder dergleichen bedingten Spannungsspitzen am Eingang der Eingangsstufe 10. Die sinusförmigen Rufinformationssignale werden dem DC-Arbeitspunkt 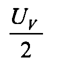 überlagert und vom ersten Operationsverstärker 50 verstärkt. Am Ausgang der ersten Filterstufe bzw. des ersten Operationsverstärkers 50 liegt somit ein gefiltertes und verstärktes sinusförmiges Rufinformationssignal vor, das durch die erste Diodenantiparallelschaltung 60 in seinem Pegel auf 0,7 V Spitzen-Spitzenspannung begrenzt und somit bereits an eine Rechteckform angenähert wird. Eine Annäherung an die Rechteckform erfolgt auch bereits durch die von der zweiten Diodenantiparallelschaltung 61 bewirkte Spannungsbegrenzung der Differenzspannung zwischen dem am ersten Eingangsanschluß 85 eingekoppelten sinusförmigen Rufinformationssignal und dem am zweiten Eingangsanschluß 90 eingekoppelten sinusförmigen Rufinformationssignal auf 0,7 V. Die erste Filterstufe 110 mit dem ersten Operationsverstärker 50 bildet ein aus der Differenz der sinusförmigen Rufinformationssignale abgeleitetes Signal. In einer zweiten Filterstufe mit dem zweiten Operationsverstärker 51 erfolgt eine nochmalige Filterung, Verstärkung und Annäherung an die Rechteckform, so daß die Eliminierung von Störungen und die Annäherung an die Rechteckform weiter verbessert werden. Dabei erfolgt durch den dritten Hochpaß 67 eine untere Bandbegrenzung des Ausgangssigals des ersten Operationsverstäkers 50, das durch den vierten Tiefpaß 58 eine obere Bandbegrenzung erfährt, durch den zweiten Operationsverstärker 51 verstärkt wird und durch die dritte Diodenantiparallelschaltung 62 am Ausgang der zweiten Filterstufe bzw. des zweiten Operationsverstärkers 51 wiederum auf 0,7 V Spitzen-Spitzenspannung begrenzt und dadurch weiter an eine Rechteckform angenähert wird. Auch in der zweiten Filterstufe wird am Eingang des zweiten Operationsverstärkers 51 das durch den dritten Hochpaß 67 von seinem Gleichanteil befreite Ausgangssignal des ersten Operationsverstärkers 50 der halben Versorgungsspannung 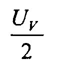 als DC-Arbeitspunkt überlagert. Der Gleichanteil des Ausgangssignals der zweiten Filterstufe bzw. des zweiten Operationsverstärkers 51 wird durch den dritten Kondensator 25 entfernt. Das auf diese Weise erzeugte gleichstromfreie Ausgangssignal des zweiten Operationsverstärkers 51 wird über den zweiten Spannungsteiler 71 wiederum der halben Versorgungsspannung 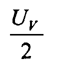 als DC-Arbeitspunkt für den dritten und den vierten Operationsverstärker 35 und 40 überlagert. Der dritte und der vierte Operationsverstärker 35 und 40 werden als Komparatoren eingesetzt, wobei die Schaltschwelle des ersten Komparators 35 durch den dritten Spannungsteiler 72 auf das 0,515-fache der Versorgungsspannung U_{V} und die Schaltschwelle des zweiten Komparators 40 über den vierten Spannungsteiler 73 auf das 0,487-fache der Versorgungsspannung U_{V} eingestellt werden. Auf diese Weise wird eine kleine Hysterese der Komparatorschaltung 111 garantiert.

Der entstandene Absolutwert nach Überlagerung der Ausgangsspannung des zweiten Operationsverstärkers 51 mit der halben Versorgungsspannung 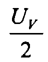 als DC-Arbeitspunkt wird mit den Schwellspannungen der beiden Komparatoren 35 und 40 verglichen. Überschreitet die am invertierenden Eingang (-) des ersten Komparators 35 liegende Eingangsspannung die Schaltschwelle des ersten Komparators 35, also das 0,515-fache der Versorgungsspannung U_{V}, so schaltet der erste Komparator 35 an seinem nicht invertierenden Ausgang (+) auf das Bezugspotential, wohingegen der nicht invertierende Ausgang (+) des Zweiten Komparators 40 auf Versorgungsspannung liegt.

Dadurch wird auch die Ausgangsspannung Uₐ des ersten NAND-Gatters 115 auf die Versorgungsspannung U_{V} geschaltet.

Unterschreitet die Spannung am nicht invertierenden Eingang (+) des zweiten Komparators 40 die Schaltschwelle des zweiten Komparators 40, so schaltet der zweite Komparator 40 an seinem nicht invertierenden Ausgang (+) auf das Bezugspotential, wohingegen der nicht invertierende Ausgang (+) des ersten Komparators 35 auf Versogungsspannung U_{V} liegt. Dadurch wird die Ausganngsspannung Uₐ des ersten NAND-Gatters 115 auf Bezugspotential geschaltet. Als Versorgungsspannung U_{V} werden bei dem beschriebenen Ausführungsbeispiel 5 V und als Bezugspotential 0 V gewählt. Die Verkopplung der beiden NAND-Gatter 115 und 120 von den Ausgängen auf den Eingang des jeweils anderen Gatters dient als Verriegelung. Die Ausgangsspannung Uₐ des ersten NAND-Gatters 115 liegt solange auf Versorgungsspannung U_{V}, wie die Eingangsspannung am invertierenden Eingang (-) des ersten Komparators 35 größer als die Schaltschwelle des ersten Komparators 35 ist. Die Ausgangsspannung Uₐ des ersten NAND-Gatter 115 liegt solange auf dem Bezugspotential, wie die Eingangsspannung am nichtinvertierenden Eingang (+) des zweiten Komparators die Schaltschwelle des zweiten Komparators unterschreitet. Durch diese Maßnahme, bzw. die Verwendung des Schmitt-Triggers 45 ist sichergestellt, daß die Ausgangsspannung Uₐ des ersten NAND-Gatters 115 ein Rechtecksignal ist, und daß dieses Rechtecksignal die gleiche Frequenz wie die sinusförmigen Rufinformationssignale an den beiden Eingangsanschlüssen 85 und 90 der Eingangsstufe 10 aufweist. Das auf diese Weise gewonnene rechteckförmige Rufinformationssignal wird der Rufidentifikationsschaltung 1 zur Ermittlung der Identität des rufenden Teilnehmers zugeführt.

Die Erfindung ist nicht auf das beschriebene Ausführungsbeispiel beschränkt, genauso wie die Dimensionierung der Bauteile gemäß Figur 2 nur beispielhaften Charakter hat und je nach Bedarf zu wählen ist.

Die Schaltung gemäß Figur 2 hat den Vorteil einer geringen Stromaufnahme und eines hohen Betriebsspannungsbereichs.

## Patentansprüche

1. Fernsprechendgerät (2) mit einer Rufidentifikationsschaltung (1) und einer Eingangsstufe (10) zur Aufbereitung von bei ankommenden Rufen übertragenen Rufinformationen, dadurch gekennzeichnet, daß der Eingangsstufe (10) sinusförmige Rufinformationssignale zuführbar sind, daß in der Eingangsstufe (10) eine Umwandlung der sinusförmigen Rufinformationssignale in rechteckförmige Rufinformationssignale erfolgt und daß die rechteckförmigen Rufinformationssignale der Rufidentifikationsschaltung (1) zuführbar sind.

2. Fernsprechendgerät (2) nach Anspruch 1, dadurch gekennzeichnet, daß die Eingangsstufe (10) zwei symmetrische Eingänge aufweist, über die der Eingangsstufe (10) die sinusförmigen Rufinformationssignale gegenphasig zuführbar sind.

3. Fernsprechendgerät (2) nach Anspruch 2, dadurch gekennzeichnet, daß die Eingangsstufe (10) eine Komparatorschaltung (111) umfaßt, der ein aus der Differenz der sinusförmigen Rufinformationssignale abgeleitetes Signal zugeführt ist und deren Referenzspannung die Mittenspannung des abgeleiteten Signals ist.

4. Fernsprechendgerät (2) nach Anspruch 3, dadurch gekennzeichnet, daß die Komparatorschaltung (111) zwei vorzugsweise als Operationsverstärker ausgebildete Komparatoren (35, 40) umfaßt, wobei die Referenzspannung des ersten Komparators (35) oberhalb und die Referenzspannung des zweiten Komparators (40) unterhalb der Mittenspannung des abgeleiteten Signals liegt und daß der Komparatorschaltung (111) ein vorzugsweise als Flip-Flop ausgebildeter Schmitt-Trigger (45) nachgeschaltet ist.

5. Fernsprechendgerät (2) nach Anspruch 3 oder 4, dadurch gekennzeichnet, daß der Komparatorschaltung (111) mindestens eine einen Bandpaß bildende Filterstufe (110) vorgeschaltet ist.

6. Fernsprechendgerät (2) nach Anspruch 5, dadurch gekennzeichnet, daß die Filterstufe (110) einen Operationsverstärker (50) umfaßt, der in einem Rückkopplungszweig einen Tiefpaß (55) aufweist.

7. Fernsprechendgerät (2) nach Anspruch 6, dadurch gekennzeichnet, daß der Operationsverstärker (50) in dem Rückkopplungszweig eine Diodenantiparallelschaltung (60) aufweist.

8. Fernsprechendgerät (2) nach Anspruch 6 oder 7, dadurch gekennzeichnet, daß die Filterstufe (110) mindestens einen dem Operationsverstärker (50) vorgeschalteten Hochpaß (65) umfaßt.

9. Fernsprechendgerät (2) nach Anspruch 6, 7 oder 8, dadurch gekennzeichnet, daß die Filterstufe (110) mindestens einen dem Operationsverstärker (50) vorgeschalteten Tiefpaß (56) umfaßt.

10. Fernsprechendgerät (2) nach einem der Ansprüche 6 bis 9, dadurch gekennzeichnet, daß der invertierende Eingang (-) des Operationsverstärkers (50) mit dem nichtinvertierenden Eingang (+) über eine Diodenantiparallelschaltung (61) verbunden ist.

11. Fernsprechendgerät (2) nach einem der Ansprüche 6 bis 10, dadurch gekennzeichnet, daß der Arbeitspunkt des Operationsverstärkers (50) durch einen Spannungsteiler (70) auf die halbe Versorgungsspannung der Eingangsstufe (10) gelegt ist und daß dem Widerstand (75) des Spannungsteilers (70), an dem die halbe Versorgungsspannung abgegriffen wird, ein Kondensator (80) parallel geschaltet ist.
